# FASCICULE DE BREVET EUROPEEN

(11) **EP 0 570 313 B1**
(45) Date de publication et mention de la délivrance du brevet: **26.03.1997**
(21) Numéro de dépôt: 93440038.3
(22) Date de dépôt: 12.05.1993
(51) Int. Cl.: A23G 3/20

(54) **Groupe de co-extrusion pour la production d'un boudin de sucre cuit ou matière analogue à deux couleurs**
Coextrusionsvorrichtung zur Herstellung von einen Zweifarbenstab aus gekochten Zuckern oder ähnlichen
Coextruding device for making two-colour nods of cooked sugar or such material

(30) Priorité: 13.05.1992 FR 9205975
(43) Date de publication de la demande: 18.11.1993
(73) Titulaire: Société TOGUM, F-67116 Reichstett (FR); ROBERT BOSCH GmbH, 70469 Stuttgart (DE)
(72) Inventeur: Towae, Gérard, F-67000 Strasbourg (FR); Jung, Paul-Werner, D-41068 Moenchengladbach (DE); Vollmer, Klaus, D-41747 Viersen (DE); Jansen, Helmut, D-47608 Geldern (DE)
(74) Mandataire: Metz, Paul

(56) Documents cités:
- FR-A- 2 564 031
- FR-A- 2 615 143
- GB-A- 354 837
- GB-A- 412 086
- US-A- 4 855 146

## Description

La présente invention se rapporte à un groupe de co-extrusion pour la production d'un boudin bicolore plein de sucre cuit avec fourrage central éventuel, tel que connu par le document GB-A-412086, qui montre les caractéristiques du préambule de la revendication 1.

Le sucre cuit constitue la matière première pour la fabrication de toutes les sortes de bonbons et friandises apparentées, quelle qu'en soit la forme.

Pour la production en grande série de bonbons à effets d'alternance de couleurs avec raies ou stries, la technique d'extrusion à plusieurs couleurs s'avère la seule possible.

Malheureusement, l'extrusion du sucre cuit constitue une véritable performance en raison de son caractère difficile et délicat.

Le sucre cuit liquide est une matière fragile. Il montre une tendance prononcée à se cristalliser rapidement dès que les conditions strictes de température et de fluidité ne sont plus remplies.

Ne pouvant se travailler qu'à l'état ductile ou pâteux, il importe de conserver cet état malléable en tout point du volume utile pendant toute la durée nécessaire au procédé de conformation.

Or, tout procédé d'extrusion s'applique sur des quantités de produit en mouvement.

Il importe donc que la masse de sucre cuit présente en tous points le même état et les mêmes propriétés.

En raison des contraintes liées au matériel telles que la vitesse d'extrusion lente dans le cas d'une matière épaisse et la difficulté de réaliser des volumes intérieurs à parois lisses et à formes hydrodynamiques interpénétrantes, et à la particularité du sucre cuit, sa co-extrusion en deux couleurs n'a pas été maîtrisée jusqu'à présent.

Le but de l'invention est de répondre à ce problème avec un groupe de co-extrusion permettant de conformer progressivement, par des voies adaptées, deux boudins de sucre cuit de forme complémentaire, et à les réunir de façon à extruder un boudin unique à deux couleurs, éventuellement fourré, présentant la forme et les motifs désirés.

Les voies d'alimentation, la tête de compression et la filière d'extrusion sont étudiées de façon à présenter des formes intérieures progressives assurant l'avance et la répartition régulière des masses de sucre cuit, sans points d'accumulation entrainant une cristallisation et un blocage de l'alimentation en sucre.

Plus particulièrement, l'association des formes spécifiques intérieures de deux canaux de la tête de compression et de la filière permet d'obtenir en sortie un boudin de sucre cuit de forme composite, avec une partie centrale cylindrique et une partie périphérique annulaire lisse ou cannelée.

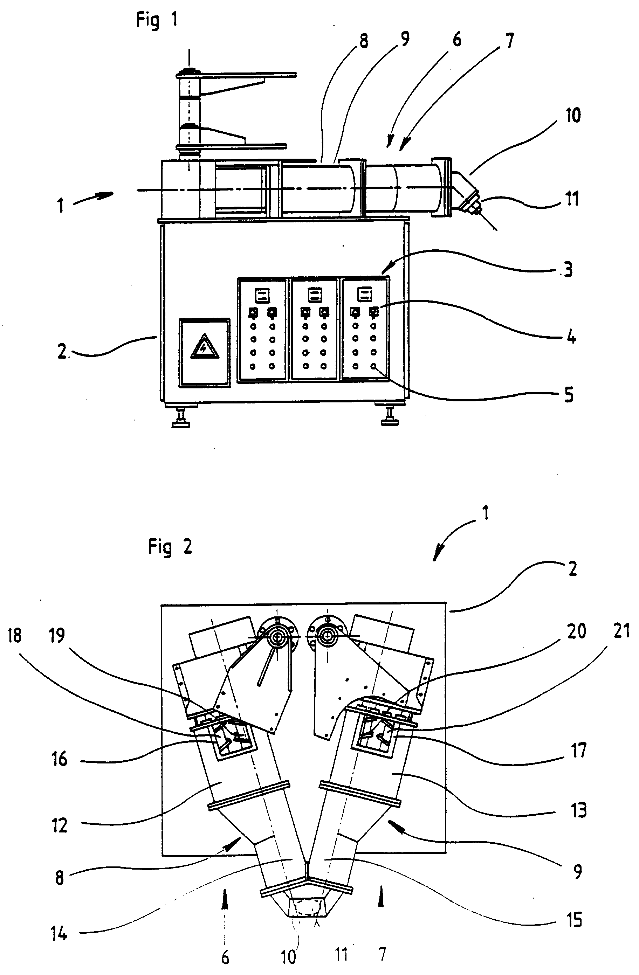

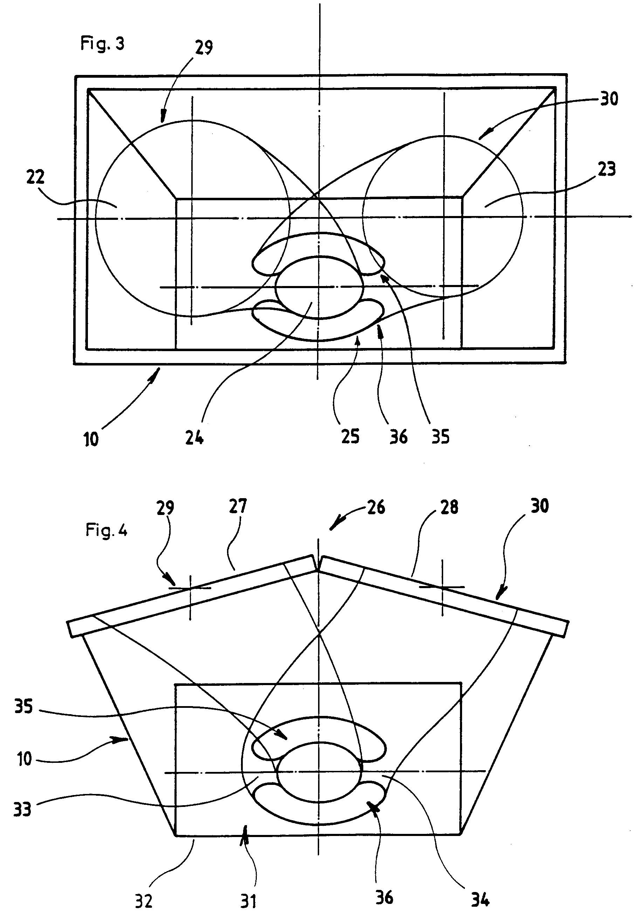

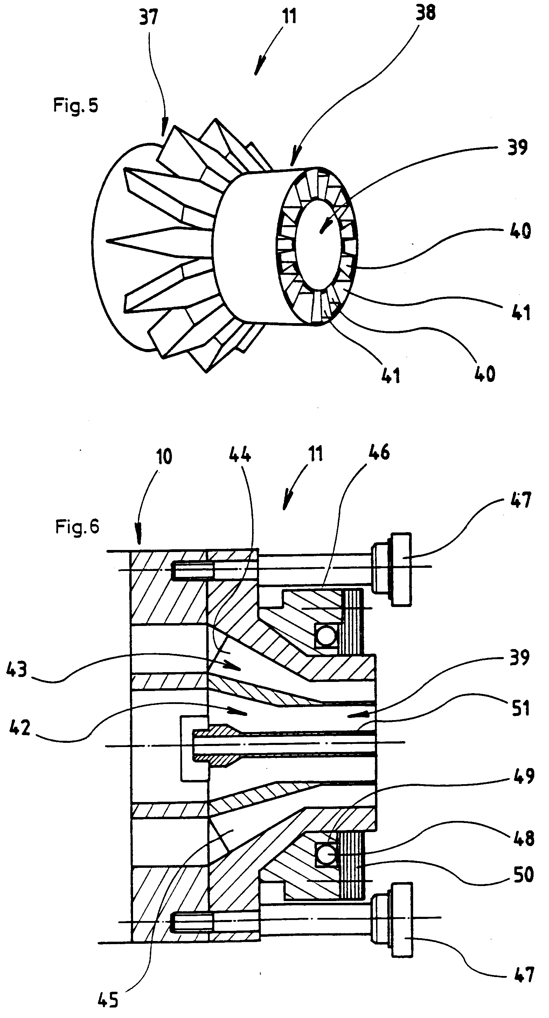

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est une vue générale en élévation d'un groupe de co-extrusion selon l'invention ;
. la figure 2 est une vue en plan du groupe de co-extrusion;
. les figures 3 et 4 sont des vues en transparent, respectivement frontale et en plan, d'une tête de compression du groupe d'extrusion ;
. la figure 5 est une vue simplifiée en perspective d'une filière d'extrusion du groupe d'extrusion ;
. la figure 6 est une vue en coupe longitudinale de la filière d'extrusion avec son dispositif de fixation.

L'idée générale inventive consiste à obtenir à partir d'un groupe de co-extrusion, par une conformation morphologique complexe adaptée des voies d'avance et de répartition des masses de pâte de sucre cuit, dépourvues d'aspérités et s'interpénétrant progressivement, un déplacement permanent et régulier du sucre dans le groupe de compression puis d'extrusion, et ainsi la formation d'un boudin composite extrudé à deux couleurs présentant la forme et les motifs voulus, ce boudin étant éventuellement fourré.

La figure 1 représente un groupe 1 de co-extrusion selon l'invention. Celui-ci se compose d'un bâti 2 parallélépipédique, à l'intérieur duquel sont disposés les organes de commande, de pilotage, de chauffe ainsi que les moteurs d'entraînement mécanique. Ces organes sont alimentés électriquement. Un tableau de commande 3 situé sur une face latérale permet à un opérateur de commander l'extrudeur par l'intermédiaire de manettes et boutons tels que 4. Une série de voyants lumineux 5 l'informent de l'état et des conditions de fonctionnement de la machine.

Le sucre cuit, qui se présente alors sous forme de pâte au coefficient de viscosité élevé, est acheminé par deux voies d'alimentation gauche 6 et droite 7, correspondant par exemple chacune à une couleur différente de sucre. Ces voies sont matérialisées par deux conduits d'amenée respectivement 8 et 9, horizontaux, situés sur la face supérieure du bâti.

Ces conduits convergent en V vers une tête de compression 10 et une filière d'extrusion 11, où est conformé le boudin de sucre cuit à deux couleurs (figure 1).

Les conduits d'amenée sont rectilignes, formés chacun de deux éléments tubulaires juxtaposés dans le prolongement l'un de l'autre et solidarisés entre eux. Il s'agit d'éléments tubulaires amont, respectivement 12 et 13, de section ovale, le grand diamètre étant horizontal, et d'éléments tubulaires aval, respectivement 14 et 15, de rétrécissement comportant une transition tronconique suivie d'une extrémité cylindrique, dont le diamètre de section correspond au petit diamètre de la section ovale de l'élément tubulaire amont.

Une ouverture d'observation ou de chargement 16,17 est ménagée dans la paroi supérieure de chaque conduit au niveau de l'élément amont.

L'avance et la compression sont assurées dans chaque conduit par deux vis hélicoïdales, respectivement 18,19 et 20,21, longitudinales, à axes de rotation parallèles, la vis adjacente étant plus courte que la vis principale.

Les deux conduits d'acheminement convergents débouchent à l'arrière de la tête de compression 10.

La tête de compression 10 représentée sur les figures 3 et 4 assure d'une part la compression, et d'autre part la répartition des boudins de pâte de sucre cuit maintenu chaud provenant des deux voies d'alimentation de manière à obtenir ensuite, au niveau de l'extrusion, un boudin plein résultant de la liaison-solidarisation des deux boudins de chaque couleur présentant les caractéristiques de mélange de couleurs ou de qualités désirées.

Plus particulièrement, les deux pâtes de sucre chaud en provenance des deux voies d'alimentation sont réparties respectivement dans un canal central 22 et un canal périphérique 23 conformés de manière à ce que le canal périphérique forme autour d'une sortie centrale 24 du canal central 22 une sortie en couronne 25.

A ce niveau, les deux voies de pâte de sucre chaud restent distinctes et les matières ne se trouvent pas encore en contact.

La tête de compression constitue un bloc de forme générale symétrique par rapport à un plan central vertical longitudinal. Sa face arrière 26 est conformée en deux plans verticaux formant entre eux un angle supplémentaire de l'angle des deux conduits en V d'amenée du sucre chaud du groupe de co-extrusion, de manière à faire face et à former des surfaces de jonction arrière 27 et 28 avec les extrémités de ces deux conduits. Les entrées, respectivement 29,30, de chaque canal central 22 et périphérique 23 de la tête de compression sont conformées respectivement dans chacune de ces surfaces de jonction arrière de manière à assurer la continuité des voies d'alimentation.

Les canaux traversent la tête de compression pour aboutir en sortie double sur une face avant 31 unique de la tête de compression. Cette face avant est conformée en une surface plane 32 inclinée vers le bas faisant face et formant jonction avec la filière d'extrusion.

Les lignes longitudinales centrales des deux canaux de la tête de compression sont symétriques et convergent, depuis la face arrière double jusqu'à se confondre au niveau sur la face avant.

Le canal central 22 de la tête de compression est de forme générale cylindro-conique se développant autour de sa ligne centrale. La base du cône est large, d'un diamètre égal au diamètre de l'élément cylindrique aval du conduit d'amenée du sucre chaud correspondant, situé à gauche de la figure, et forme l'entrée 29. Elle se situe sur la surface de jonction arrière gauche. La base étroite forme la sortie centrale 24 de sucre cuit sur la face avant du cône de la tête de compression.

Le canal périphérique 23 est de forme générale cylindrique autour de sa ligne centrale.

Son entrée 30 se situe sur l'autre surface de jonction arrière, et sa sortie périphérique annulaire 25 sur la face avant, autour de la sortie centrale du canal central.

A cet effet, les formes géométriques complexes correspondant aux deux canaux viennent s'interpénétrer, le canal périphérique venant progressivement entourer le canal central (voir figure 4).

Il est bien entendu cependant, que les voies restent absolument distinctes, les canaux étant toujours séparés par des parois. La solidarisation des boudins de pâte de sucre chaud ne s'effectue qu'ultérieurement au niveau de la filière d'extrusion.

Afin d'améliorer la répartition du sucre et de supprimer les points éventuels d'accumulation, de concentration, de ralentissement et d'immobilisation qui entraineraient une cristallisation rapide et prématurée du sucre, deux becquets de cisaillement avant 33 et arrière 34 dans le sens de déplacement du sucre sont disposés à l'intérieur du canal périphérique autour du canal central.

Ces becquets divisent et orientent le sucre périphérique suivant une voie supérieure 35 et une voie inférieure 36, au-dessus et au-dessous du canal central, de section en forme générale de portions d'anneau respectivement supérieure et inférieure autour du canal central.

A cet effet, le premier becquet affecte la forme d'un prisme triangulaire dont l'arête joue le rôle de couteau diviseur et répartiteur entre les voies périphériques supérieure et inférieure.

Le second becquet supprime l'espace mort derrière le canal central, et y évite l'accumulation de matière immobile.

Au niveau de la sortie double sur la face avant de la tête de compression, les becquets affectent une forme effilée de manière à rapprocher progressivement les extrémités latérales des voies périphériques supérieure et inférieure, jusqu'à former un canal périphérique unique de section annulaire.

Ainsi, dans chacun des deux canaux de compression de la tête, l'avance régulière et la répartition du sucre sont assurées par la morphologie spécifique et l'interpénétration géométrique de ces canaux.

La tête ou filière d'extrusion 11 représentée en détail sur les figures 5 et 6 est montée amovible sur la face avant de la tête de compression 10. On peut ainsi la changer en fonction de la conformation des motifs et des couleurs spécifiques désirés pour le boudin de sortie. La filière d'extrusion décrite assure la formation d'un boudin cylindrique bicolore à rayures longitudinales égales.

Elle présente une partie arrière 37 conique prolongée par une partie avant 38 cylindrique.

La partie avant constitue l'extrémité de sortie du groupe d'extrusion. Elle comporte un canal central 39 de sortie cylindrique en communication périphérique avec des cannelures radiales telles que 40 régulièrement disposées sur son pourtour. Une pluralité de canaux périphériques tels que 41 complémentaires sont disposés entre ces cannelures, de manière à compléter la section de la sortie d'extrusion du boudin de sucre pour l'obtention d'une forme cylindrique pleine.

Ainsi, le boudin unique de sortie sera cylindrique à rayures longitudinales.

La partie arrière conique de la filière d'extrusion est destinée à assurer la jonction entre la sortie de la tête de compression 10 et la partie avant d'extrusion, d'une part par un canal central de jonction 42 reliant la sortie centrale de la tête d'extrusion et le canal central de sortie 39 et d'autre part par un canal de jonction périphérique 43 reliant la sortie périphérique de la tête d'extrusion aux canaux périphériques de sortie.

La forme conique du canal de jonction central 42 contribue par compression à orienter et à répartir régulièrement le sucre chaud de la voie centrale dans la partie centrale du canal central et dans les cannelures latérales, des couteaux prismatiques effilés divisant la masse de sucre par cisaillement sur le pourtour, afin de la diriger vers les cannelures.

Le canal de jonction périphérique 39 comporte également des couteaux prismatiques tels que 44, 45 divisant la matière de manière à répartir et diriger le sucre dans les canaux périphériques de sortie.

La filière d'extrusion est solidarisée à la tête de compression par exemple par l'intermédiaire d'un carter 46 de forme intérieure complémentaire à la forme de la filière maintenant la filière plaquée contre la face avant de la tête de compression au moyen de vis telles que 47.

Dans la réalisation représentée sur la figure 6, il est prévu un élément de chauffage 48 annulaire autour de la partie cylindrique d'extrémité de la filière afin de réchauffer le sucre pour favoriser la liaison-solidarisation des boudins périphériques avec le boudin cannelé central en vue de former un boudin cylindrique plein unique.

Cet élément de chauffage est disposé dans une gorge 49 du carter, et maintenu par une plaque de protection 50.

De manière optionnelle, le boudin composite extrudé pourra être fourré.

A cet effet, une fine buse 51 centrale intérieure de fourrage, que l'on a représentée uniquement sur la figure 6, pourra être disposée longitudinalement selon l'axe central de sortie au niveau de la partie cylindrique d'extrémité de la filière.

Elle est alimentée par l'intermédiaire d'une buse de raccordement transversale non représentée.

Bien entendu, d'autres formes ou variantes de la tête d'extrusion sont possibles en fonction de la forme désirée du boudin bicolore de sortie.

Il est également bien entendu que de façon générale, au-delà des moyens décrits, diverses modifications évidentes et variantes simples sont possibles dans la limite définie par la portée des revendications.

## Revendications

1. Groupe de co-extrusion d'un boudin de pâte de sucre cuit à deux couleurs, comportant deux conduits (8,9) d'amenée des pâtes de sucre reliés à une tête (10) de compression et de répartition, et une filière (11) d'extrusion fixée à la sortie de la tête (10) de compression et de répartition, ladite tête (10) de compression et de répartition comportant deux canaux, un central (22) et un périphérique (23), dont les entrées (29,30) sur la face arrière sont reliées respectivement à chacun des conduits (8,9) d'amenée, et dont les sorties (24,25) débouchent dans le même plan sur la face avant, la sortie (25) du canal périphérique (23) entourant la sortie (24) du canal central (22), caractérisé en ce que les conduits (8,9) d'amenée sont convergents en V vers la tête (10) de compression et de répartition des boudins de pâtes de façon que le canal périphérique (23) entoure progressivement le canal central (22).

2. Groupe selon la revendication 1, caractérisé en ce que les lignes centrales des deux canaux (22,23) de la tête (10) de compression et répartition sont symétriques et convergentes par rapport à un plan central vertical longitudinal jusqu'à se confondre au niveau des sorties (24,25), et en ce que le canal central (22) présente une forme tronconique, et le canal périphérique (23) une forme cylindrique, ce canal périphérique venant progressivement entourer le canal central.

3. Groupe selon l'une des revendications 1 ou 2, caractérisé en ce qu'un becquet de cisaillement et de répartition avant (33), de forme globalement prismatique, est disposé sur la paroi du canal central (22) dans sa partie intérieure au canal périphérique (23), face à l'arrivée du sucre cuit dans ce canal périphérique (23), et en ce qu'un becquet de cisaillement et de répartition arrière (34), en forme de coin, est disposé entre les parois du canal central (22) et du canal périphérique (23), en arrière du canal central (22) par rapport à l'arrivée du sucre cuit.

4. Groupe selon l'une quelconque des revendications 1, 2 ou 3, caractérisé en ce que la filière (11) d'extrusion présente dans sa partie avant (38), d'une part un canal central de sortie (39) de forme circulaire augmenté de cannelures (40), et d'autre part une pluralité de canaux périphériques (41) de sortie de section complémentaire de manière à former un boudin unique de sortie cylindrique à motif rayé longitudinalement, la partie arrière (37) de la filière (11) d'extrusion comportant un canal central de jonction (42), de forme globalement tronconique, et un canal périphérique de jonction (43) entourant le canal central de jonction (42), lesdits canaux de jonction comportant des couteaux prismatiques (44,45) de cisaillement et de répartition des masses de sucre chaud, respectivement dans les cannelures (40) du canal central de sortie (39) et dans les canaux périphériques (41) de sortie.

5. Groupe selon l'une quelconque des revendications précédentes, caractérisé en ce que la filière (11) d'extrusion comporte un moyen de chauffage (48) entourant les voies de sortie de sucre.

## Claims

1. Coextruding apparatus for making a two-colour extrudate of cooked sugar paste, comprising two ducts (8,9) supplying the sugar pastes, connected to a compression and separation head (10), and an extrusion die (11) secured to the output of the compression and separation head (10), said compression and separation head (10) comprising two channels, one central channel (22) and one peripheral channel (23), of which the inputs (29,30) on the rear face are connected, respectively, to each of the supply ducts (8,9), and the outputs (24,25) of which open into the same plane on the front face, the output (25) of the peripheral channel (23) surrounding the output (24) of the central channel (22), characterised in that the supply ducts (8,9) converge in a V-shape towards the compression and separation head (10) for the extrudates of paste in such a manner that the peripheral channel (23) progressively surrounds the central channel (22).

2. Apparatus according to Claim 1, characterised in that the central cords of the two channels (22,23) of the compression and extrusion head (10) are symmetrical and convergent in relation to a longitudinal vertical central plane until they merge in the vicinity of the outputs (24,25), and in that the central channel (22) has a frustoconical shape, and the peripheral channel (23) has a cylindrical shape, this peripheral channel (23) progressively surrounding the central channel (22).

3. Apparatus according to one of Claims 1 or 2, characterised in that a front cutting and separation fender (33), the shape of which, as a whole, is prismatic, is disposed on the wall of the central channel (22) in the part thereof which is inside the peripheral channel (23), facing the arrival of the cooked sugar into the peripheral channel (23), and in that a rear cutting and separation fender (34), in the form of a wedge, is disposed between the walls of the central channel (22) and the peripheral channel (23), behind the central channel (22) in relation to the arrival of the cooked sugar.

4. Apparatus according to any one of Claims 1, 2 or 3, characterized in that the extrusion die (11) has, in its front part (38), on the one hand, a central output channel (39) of circular shape provided with webs (40), and, on the other hand, a plurality of peripheral output channels (41) of complementary section such as to form a single cylindrical output extrudate, with a longitudinally striped pattern, the rear part (37) of the extrusion die (11) comprising a central connecting channel (42), of a shape which, as a whole, is frustoconical, and a peripheral connecting channel (43) surrounding the central connecting channel (42), said connecting channels comprising prismatic cutters (44,45) for cutting and separating the masses of hot sugar in the webs (40) of the central output channel (39) and in the peripheral output channels (41) respectively.

5. Apparatus according to any one of the preceding Claims, characterized in that the extrusion die (11) comprises a heating means (48) surrounding the output paths of the sugar.

## Patentansprüche

1. Vorrichtung zum Koextrudieren eines zweifarbigen Massenstrangs aus eingedicktem Zucker, mit zwei mit einem Verdichtungs- und Verteilungskopf (10) verbundenen Speiseleitungen (8, 9) für die Zuckermasse und einer am Auslaß des Verdichtungs- und Verteilungskopfes (10) festgelegten Extrusionsdüse (11), wobei der Verdichtungs- und Verteilungskopf (10) zwei Kanäle aufweist, einen zentralen Kanal (22) und einen peripheren Kanal (23), deren Einlässe (29,30) an der Rückseite jeweils mit einem der Speiseleitungen (8, 9) verbunden sind, und deren Auslässe (24, 25) in derselben Ebene an der Vorderseite münden, wobei der Auslaß (25) des peripheren Kanals (23) den Auslaß (24) des zentralen Kanals (22) umgibt, dadurch gekennzeichnet, daß die Speiseleitungen (8, 9) derart V-förmig in Richtung des Verdichtungs- und Verteilungskopfes (10) für die Massenstränge konvergieren, daß der periphere Kanal (22) den zentralen Kanal (23) zunehmend umgibt.

2. Vorrichtung nach Anspruch 1, dadurch gekennzeichnet, daß die Mittelachsen der beiden Kanäle (22, 23) des Verdichtungs- und Verteilungskopfes (10) in bezug auf eine zentrale vertikale Längsebene symmetrisch und konvergierend ausgebildet sind, bis sie in Höhe der Auslässe (24, 25) ineinander übergehen, und daß der zentrale Kanal (22) kegelstumpfförmig und der periphere Kanal (23) zylindrisch ausgebildet sind, wobei der periphere Kanal (23) den zentralen Kanal (22) zunehmend umgibt.

3. Vorrichtung nach Anspruch 1 oder 2, dadurch gekennzeichnet, daß ein insgesamt prismenförmiger vorderer Scher- und Verteilungskörper (33) an der Wand des zentralen Kanals (22) im inneren Abschnitt des peripheren Kanals (23) der Einspeisung des eingedickten Zuckers in diesen peripheren Kanal (23) zugewandt angeordnet ist, und daß ein keilförmiger hinterer Scher- und Verteilungskörper (34) zwischen den Wänden des zentralen Kanals (22) und des peripheren Kanals (23) in bezug auf die Einspeisung des eingedickten Zuckers im hinteren Bereich des zentralen Kanals (22) angeordnet ist.

4. Vorrichtung nach einem der Ansprüche 1 bis 3, dadurch gekennzeichnet, daß die Extrusionsdüse (11) in ihrem Vorderteil (38) einerseits einen kreisförmigen, durch Rinnen (49) vergrößerten zentralen Auslaßkanal (39), andererseits eine Mehrzahl von peripheren Auslaßkanälen (41) komplementären Querschnitts aufweist, um einen einzigen zylindrischen, mit Längsstreifen versehenen Ausstrittsstrang zu bilden, wobei der rückwärtige Teil (37) der Extrusionsdüse (11) einen insgesamt kegelstumpfförmigen zentralen Verbindungskanal (42) und einen den zentralen Verbindungskanal (42) umgebenden peripheren Verbindungskanal (43) aufweist, welcher mit prismenförmigen Schneiden (44, 45) zum Trennen und Aufteilen der heißen Zuckermasse auf die Rinnen (40) des zentralen Auslaßkanals (39) bzw. die peripheren Auslaßkanäle (41) versehen ist.

5. Vorrichtung nach einem der vorangehenden Ansprüche, dadurch gekennzeichnet, daß die Extrusionsdüse (11) eine die Austrittswege des Zuckers umgebende Heizeinrichtung (48) aufweist.
